# EUROPÄISCHE PATENTANMELDUNG

(11) **EP 1 111 351 A2**
(43) Veröffentlichungstag der Anmeldung: **27.06.2001**
(21) Anmeldenummer: 00125656.9
(22) Anmeldetag: 23.11.2000
(51) Int. Cl.: G01F 23/296

(54) **Prismen-Lambwellensensor**

(30) Priorität: 22.12.1999 DE 19961856
(71) Anmelder: Endress + Hauser GmbH + Co., 79689 Maulburg (DE)
(72) Erfinder: Getman, Igor, 79539 Lörrach (DE); Lopatin, Sergej, 79539 Lörrach (DE); Hardell, Alexander, 79539 Lörrach (DE)
(74) Vertreter: Andres, Angelika

(57) **Zusammenfassung**

Es wird ein Prismen-Lambwellensensor vorgeschlagen, der als Teil einer Vorrichtung zur elektronischen Überwachung von Füllständen in Behältern (1) an der Außenfläche einer Behälterwand (2) im Bereich des zu überwachenden Füllstandsniveaus angebracht wird und
- aus einem Lambwellenerreger (4) und einem zu diesem im Abstand angeordneten Lambwellenempfänger(5) besteht,
   -- die beide Ultraschallwandler sind und
   -- jeweils aus einem an der Behälterwand (2) befestigten Prisma (6) oder prismenförmigen Formteil (6) und einem auf dessen von der Behälterwand (2) abgewandten Schräge (7) befestigten, über elektrische Anschlüsse mit einem Erregerstromkreis bzw. einem Auswertestromkreis verbundenen piezo-elektrischen Element (8) bestehen,
      --- wobei für die Anwendung an rohrförmigen Behältern (1) oder Behältern (1) mit gewölbter Behälterwand (2) die Auflagefläche (9) der Prismen (6) von den Seitenkanten (10) aus nach innen bis zur Mittellinie (11) spitzwinklig abgeschrägt ist. Damit wird die Auflagefläche (9) der Prismen (6) an den Verlauf der gewölbten Behälterwand (2) angenähert.(Fig. 2) Die Erregungszone (b) für die Lambwellen vergrößert sich gegenüber einer planen Auflagefläche, die mechanische Stabilität der Anordnung wird erhöht. Wenn der spitze Winkel α der Abschrägung ca. 8° beträgt, ist die Anordnung für verschiedene Durchmesser D eines rohrförmigen Behälters (1) im Bereich von 20 mm bis 200 mm gut einsetzbar. Eine Staffelung des Winkels α in Anpassung an unterschiedliche Bereiche des Durchmessers D kann von Vorteil sein.

## Beschreibung

Die Erfindung bezieht sich auf einen Prismen-Lambwellensensor, der als Teil einer Vorrichtung zur elektronischen Überwachung von Füllständen in Behältern an der Außenfläche einer Behälterwand im Bereich des zu überwachenden Füllstandsniveaus angebracht wird und aus einem Lambwellenerreger und einem zu diesem im Abstand angeordneten Lambwellenempfänger besteht, die beide Ultraschallwandler sind und jeweils aus einem an der Behälterwand befestigten Prisma oder prismenförmigen Formteil und einem auf dessen von der Behälterwand abgewandten Schräge befestigten, über elektrische Anschlüsse mit einem Erregerstromkreis bzw. einem Auswertestromkreis verbundenen piezo-elektrischen Element bestehen.

Lambwellen sind bestimmte Ultraschallwellen, die in Platten oder Behälterwänden auftreten können, und zwar in materialabhängigen Eigenmoden. Sie können angeregt werden durch schräg auf eine Platte oder eine Behälterwand auftreffende longitudinale Ultraschallwellen. Man kann sie sich zusammengesetzt denken aus senkrecht zur Oberfläche schwingenden Scherungs- oder Tranversalwellen und tangential schwingenden Kompressions- oder Longitudinalwellen. Abhängig von der Dicke d der Platte oder der Behälterwand und der Erregerfrequenz □ können Wellen verschiedener Ordnungszahl erregt werden, von denen die der Ordnungszahl Null (zeroth mode) besonders günstige Eigenschaften haben, weil sie eine besonders ausgeprägte Wechselwirkung mit Einflüssen auf die Oberflächen haben. Im Unterschied zu reinen oder echten Oberflächenwellen, den sogenannten Rayleigh-Wellen, greifen die Lambwellen der Ordnungszahl Null stets durch die ganze Platte durch und haben eine sich periodisch, sinusförmig ausbreitende Verformung der Oberflächen zur Folge, die bezüglich der Mittelebene symmetrisch oder anti-symmetrisch sein kann. Einflüsse auf die eine Oberfläche einer Platte oder Behälterwand wirken sich also durch diese hindurch auch auf die andere Oberfläche aus. Für die praktische Anwendung sind insbesondere die symmetrischen Lambwellen der Ordnungszahl Null, die als s₀-mode (zeroth symmetrical mode) bezeichnet werden, von Bedeutung. (ULTRASONIC TECHNOLOGY, A Series of Monographs, General Editor Lewis Balamuth, Cavitron Corporation, New York,N.Y, RAYLEIGH AND LAMB WAVES, Physical Theory and Applications, I.A.Viktorov, Seite 69,70 und Seite 82 Abs.3).

Nach einer bekannten Methode können die schräg auf die Platte auftreffenden Ultraschallwellen mit Hilfe eines Prismas oder eines prismenförmigen Formteils erzeugt werden, das auf der Platte befestigt ist und auf dessen Schräge ein piezo-elektrisches Element fest angeordnet ist, das über Elektroden mit einer Wechselspannungsquelle verbunden ist. Die durch einen Wechselspannungsimpuls in dem piezo-elektrischen Element ausgelöste Longitudinalwelle (Ultraschallwelle) wird durch das Prisma auf die Platte übertragen und trifft auf diese in einem vom Öffnungswinkel Θ des Prismas abhängigen Winkel auf. Vom Öffnungswinkel Θ des Prismas abhängig ist auch das anteilige Verhältnis der Longitudinal- und Transversalwellen an den resultierenden Lambwellen und damit deren Amplituden, bzw. welcher Lambwellen-Mode angeregt wird, wobei außerdem eine Frequenzabhängigkeit besteht. Weiter ist von Bedeutung die Größe bzw. die Abmessung der sogenannten Erregungszone b an der Grenzfläche zwischen Prisma und Platte, die bestimmt wird von der Projektion der auf der Schrägen des Prismas von dem piezo-elektrischen Element bedeckten Fläche auf die Grenzfläche zwischen Prisma und Platte. Die Höhe der Maxima der erregten Lambwellen ist dieser Erregungszone b direkt proportional (Seite 84, Abs. 2, Seite 87 bis 88 a.a.O.).

Die Nutzung von Lambwellen bei der Füllstandsmessung und Füllstandsüberwachung an Behältern ist bekannt. In der DE 689 03 015 T2 ist eine Vorrichtung zur Füllstandsüberwachung in einem Behälter beschrieben, bei der an der Außenwand eines Behälters im Bereich des zu überwachenden Füllstandsniveaus ein Lambwellenerreger und ein Lambwellenempfänger horizontal oder vertikal im Abstand zueinander angeordnet sind, die mit einer Elektronik verbunden sind, die den Erregerstromkreis und den Auswertestromkreis enthält. Am Lambwellenerreger durch Wechselspannungsimpulse im piezo-elektrischen Element hervorgerufene Ultraschalldruckwellen erzeugen sich in der Behälterwand ausbreitende Lambwellen, die von dem im Abstand angeordneten Lambwellenempfänger aufgenommen und in der Elektronik in ein elektrisches Signal zurückverwandelt werden. Lambwellenerreger und Lambwellenempfänger können nach einem Vorschlag dieser Schrift spiegelbildlich gleich als Prismenerreger und Prismenempfänger ausgebildet sein. Solange das vorbestimmte Füllstandsniveau nicht erreicht ist, können sich die in der Behälterwand hervorgerufenen Lambwellen ungehindert bis zum Prismen-Lambwellenempfänger ausbreiten und von diesem aufgenommen werden. Sobald das Füllstandsniveau erreicht ist, werden dagegen die Lambwellen durch den Behälterinhalt derart bedämpft, daß sie den Prismen-Lambwellenempfänger nicht mehr oder nicht mehr in ausreichender Stärke erreichen können, um ein Empfangssignal auszulösen. Das auftretende oder ausbleibende elektrische Signal am Prismen-Lambwellenempfänger gibt also Aufschluß über das Erreichen oder Nichterreichen des vorbestimmten Füllstandsniveaus.

Bei Behältern mit gewölbten Behälterwänden und insbesondere Rohren mit verhältnismäßig geringem Durchmesser von z.B. 20 mm bis 200 mm haben solche Anordnungen den Nachteil, daß das Prisma bzw. das prismenförmige Formteil des Lambwellenerregers und des Lambwellenempfängers nur eine linienförmige Berührung mit der Behälterwand haben, wodurch die Erregungszone b für die Lambwellen in ihren Abmessungen stark reduziert ist und damit auch die Amplitude der ausgelösten Lambwellen vermindert ist, die, wie oben ausgeführt, von der Größe der Erregungszone b direkt abhängt. Durch die nur linienförmige Berührung des Prismas oder prismenförmigen Formteils mit der Behälterwand wird außerdem die gegenseitige Ausrichtung von Lambwellenerreger und Lambwellenempfänger kritisch bzw. erschwert, wodurch die Richtwirkung der Lambwelle negativ beeinflußt werden kann. Nur wenn der Lambwellenerreger und der Lambwellenempfänger an der Behälterwand genau aufeinander ausgerichtet sind, kann die sich vom Lambwellenerreger fortpflanzende Lambwelle auf kürzestem Weg vom Lambwellenempfänger empfangen werden. Ist diese Ausrichtung ungenau, werden in der Behälterwand umlaufende Lambwellen auf einem längeren Weg empfangen, und es kommt zu schädlichen Interferenzen zwischen den sich auf direktem Weg und den sich auf längerem Weg ausbreitenden Lambwellen.

Der sich neben bzw. beidseitig der Berührungslinie zwischen Prisma und Behälter- oder Rohrwand ergebende Zwischenraum wird nach dem Stand der Technik mit einer Koppelpaste aufgefüllt, die einerseits der mechanischen Befestigung des Prismas an der Behälterwand dient, aber auch eine akustische Kopplung zwischen Prisma und Behälterwand für die Ultraschallwellen herstellen muß, um einen zu starken Impedanzsprung zwischen Lambwellenerreger bzw. Lambwellenempfänger und Behälterwand zu vermeiden. Wegen der unterschiedlichen Schichtdicke der Koppelpaste im Falle einer gewölbten Behälterwand zwischen der Berührungslinie und den Seitenkanten des Prismas einerseits und der Behälterwand andererseits ist die Impedanzanpassung aber immer deutlich schlechter als bei exakt aneinander anliegenden, ebenen Berührungsflächen, und es können Störeffekte in Form von parasitären Wellen oder Oberwellen auftreten. Da die Koppelpaste dämpfend wirkt, ist sie zum Auffüllen größerer Ritzen oder Zwischenräume nicht geeignet. Außerdem ist die Ausrichtung der Prismen des Lambwellenerregers und des Lambwellenempfängers wegen der nur linienförmigen Auflage an der Behälterwand bei der Befestigung mit Hilfe der Koppelpaste schwierig und kann sich im Betrieb z.B. bei mechanischer oder thermischer Belastung verändern.

Aufgabe der Erfindung ist es, einen Prismen-Lambwellensensor zu schaffen, der für den Einsatz bei Vorrichtungen zur Füllstandsmessung und Füllstandsüberwachung an Behältern mit gewölbter Behälterwand, insbesondere an Rohren oder rohrförmigen Behältern geeignet ist.

Erfindungsgemäß wird dies erreicht mit einem Prismen-Lambwellensensor, der als Teil einer Vorrichtung zur elektronischen Überwachung von Füllständen in Behältern an der Außenfläche einer Behälterwand im Bereich des zu überwachenden Füllstandsniveaus angebracht wird und aus einem Lambwellenerreger und einem zu diesem im Abstand angeordneten Lambwellenempfänger besteht, die beide Ultraschallwandler sind und jeweils aus einem an der Behälterwand befestigten Prisma oder prismenförmigen Formteil und einem auf dessen von der Behälterwand abgewandten Schräge befestigten, über elektrische Anschlüsse mit einem Erregerstromkreis bzw. einem Auswertestromkreis verbundenen piezo-elektrischen Element bestehen, wobei für die Anwendung an rohrförmigen Behältern oder Behältern mit gewölbter Behälterwand die Auflagefläche der Prismen von den Seitenkanten aus nach innen bis zur Mittellinie spitzwinklig abgeschrägt ist und dadurch in der Auflagefläche eine keilförmige Ausnehmung mit stumpfem Winkel gebildet ist.

Für die Anwendung an Rohren oder rohrförmigen Behältern oder Behältern mit gewölbter Behälterwand liegt der Winkel α, um den die Auflagefläche der Prismen von den Seitenkanten aus nach innen abgeschrägt ist, im Bereich von 2° bis 11°.

Nach einem speziellen Vorschlag der Erfindung beträgt der Winkel α, um den die Auflagefläche der Prismen von den Seitenkanten aus nach innen abgeschrägt ist, für die Anwendung bei rohrförmigen Behältern mit einem Außendurchmesser D von 20 mm bis 200 mm oder bei Behältern mit entsprechend gewölbter Behälterwand vorzugsweise jeweils ca. 8°.

Damit wird erreicht, daß die Auflagefläche der Prismen dem Verlauf der Behälterwand angenähert wird und sich statt einer Berührungslinie wie im Falle einer planen Auflagefläche der Prismen an einer gewölbten Behälterwand zwei Berührungslinien an den schrägen Flächen der sich ergebenden keilförmigen Ausnehmung in der Auflagefläche der Prismen mit der Behälterwand ergeben. Durch die Auflage der Prismen auf der Behälterwand an zwei Berührungslinien, die beidseitig der Mittellinie der Prismen verlaufen, kann die Ausrichtung der Prismen von Lambwellenerreger und Lambwellenempfänger auf der gewölbten Behälterwand leichter und exakter erfolgen, als wie bisher mit einer einzigen Berührungslinie, die auf der Mittellinie verläuft. Vom Lambwellenempfänger werden also die sich auf kürzestem Weg vom Lambwellenerreger ausbreitenden Lambwellen empfangen und störende Interferenzen an der empfangenen Lambwelle vermieden.

Die mechanische Stabilität der gesamten Anordnung wird ebenfalls verbessert.

Indem die Auflagefläche der Behälterwand lediglich angenähert wird, können gleich ausgebildete Prismen in einem gewissen Bereich für Behälter mit unterschiedlichem Durchmesser oder unterschiedlicher Wölbung der Behälterwand verwendet werden, und es wird nicht für jeden Behälterdurchmesser eine spezielle Anfertigung der Prismen benötigt, was der Fall wäre, wenn die Auflagefläche der Prismen der Wölbung der Behälterwand genau angepaßt, also im Querschnitt teilkreisförmig ausgebildet wäre.

Auch kann sich die Behälterwand so in die keilförmige Ausnehmung "einschmiegen", daß auch die Erregungszone b für die Lambwellen der Situation angenähert wird, in der die Prismen ganzflächig an der Behälterwand anliegen. Es werden so Lambwellen erregt, die eine größere Amplitude aufweisen, als bei nur einer Berührungslinie, so daß verwertbare Signale am Lambwellenempfänger erhalten werden.

Durch die erfindungsgemäße Ausbildung der Auflagefläche der Prismen verkleinert sich der Zwischenraum, der zwischen den Prismen und der Behälterwand bestehen bleibt und mit Koppelpaste auszufüllen ist, deutlich gegenüber einer planen Auflagefläche mit nur einer Berührungslinie. Die somit geringere Schichtdicke der Koppelpaste erlaubt eine bessere lmpedanzanpassung zwischen den Prismen und der Behälterwand, und die dämpfende Wirkung der Koppelpaste wird entsprechend gemindert. Es ergeben sich besser definierte Verhältnisse für die Lambwellen im Vergleich zur planen Auflagefläche mit nur einer Berührungslinie, bei der die Verteilung der Koppelpaste und die daraus folgenden störenden Wirkungen nie ganz klar sind. Außerdem wird Koppelpaste eingespart.

Die Prismen haben an sich eine dreieckförmige Seitenansicht; wenn sie parallel zur Behälterwand quaderförmig verlängert sind, trägt dies ebenfalls zur mechanischen Stabilität bei und erleichtert das Anbringen der Prismen an der Behälterwand. In bestimmten Fällen bewirkt die quaderförmige Verlängerung der Prismen auch eine bessere Ausnutzung der Erregungszone b, wenn nämlich die Projektion der auf der Schrägen des Prismas von dem piezo-elektrischen Element bedeckten Fläche auf die Grenzfläche zwischen Prisma und Platte oder Behälterwand über die Auflagefläche eines Prismas mit nur dreieckiger Seitenansicht hinausreicht.

Die Prismen können aus Standard-Kunststoffteilen hergestellt werden, die piezo-elektrischen Elemente bestehen vorzugsweise aus Composite-Material, dessen akustische Impedanz an den Kunststoff des Prismas angepaßt ist.

Prismen aus Composite-Material sind aber ebenfalls denkbar, wobei wiederum deren akustische Impedanz an das Material, vorzugsweise Kunststoff, der Behälterwand anzupassen wäre.

Im folgenden wird die Erfindung anhand der anhängenden Zeichnung beispielhaft genauer beschrieben; es zeigen
Fig. 1 einen Längsschnitt durch ein Rohr oder einen rohrförmigen Behälter mit seitlich an der Außenwand angeordnetem Prismen-Lambwellenerreger und Prismen-Lambwellenempfänger zur Messung oder Überwachung des Füllstands nach der Erfindung,
Fig. 2 einen Querschnitt durch das Rohr gemäß Fig. 1 entlang einer der Schnittlinien II - II jeweils mit Blickrichtung auf das Prisma und
Fig. 3a und 3b die Projektion der auf der Schrägen eines Prismas von einem piezo-elektrischen Element bedeckten Fläche auf die Grenzfläche zwischen dem Prisma und einer Platte oder Behälterwand bei einem quaderförmig verlängerten Prisma im Vergleich zu einem Prisma mit nur dreieckiger Seitenansicht.

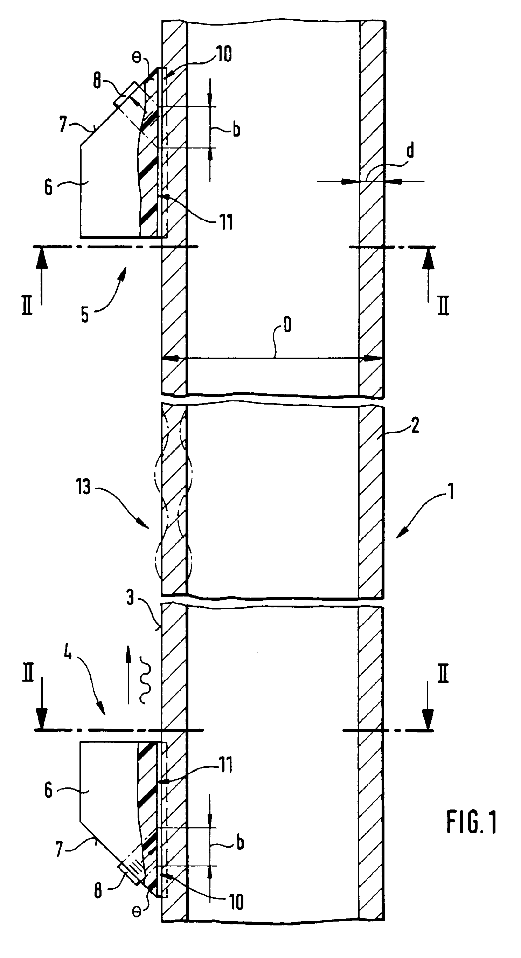

Fig. 1 zeigt einen Längsschnitt durch ein Rohr oder einen rohrförmigen Behälter 1, dessen Behälterwand 2 eine Dicke d von üblicherweise ca. 3 mm haben kann. Der Durchmesser D des Rohres oder rohrförmigen Behälters 1 soll 20 mm bis 200 mm betragen können. Zur Überwachung eines vorbestimmten Füllstandsniveaus in dem Rohr oder rohrförmigen Behälter 1 sind auf seiner Mantelfläche 3 im Bereich dieses Füllstandsniveaus im Abstand zueinander - und im dargestellten Fall vertikal aufeinander ausgerichtet - ein Lambwellenerreger 4 und ein Lambwellenempfänger 5 befestigt, die gemeinsam einen Lambwellensensor für eine Füllstandsmeß- oder Füllstandsüberwachungsvorrichtung bilden. Der Abstand zwischen Lambwellenerreger 4 und Lambwellenempfänger 5 kann z.B. 12 cm betragen; eine gegenseitige horizontale Ausrichtung in Höhe des Füllstandsniveaus wäre ebenfalls möglich.

Der Lambwellenerreger 4 und der Lambwellenempfänger 5 sind beide Ultraschallwandler des Prismentyps und spiegelbildlich gleich ausgebildet, so daß die Beschreibung auf einen der beiden beschränkt werden kann. An der Mantelfläche 3 des rohrförmigen Behälters 1 befestigt ist ein Prisma oder prismenförmiges Formteil 6 mit einem Öffnungswinkel θ. Auf der durch den Öffnungswinkel θ bestimmten, vom Behälter 1 abgewandten Schrägen 7 des Prismas 6 ist ein piezo-elektrisches Element 8 in Form einer flachen Scheibe oder eines Blättchens befestigt, das über nicht dargestellte Anschlüsse mit einem Erreger- bzw. Auswertungsstromkreis verbunden ist. Die Projektion der auf der Schrägen 7 von dem piezo-elektrischen Element 8 bedeckten Fläche auf die Berührungsfläche zwischen Prisma 6 und Behälterwand 2 bestimmt die Erregungszone b für die Erregung der Lambwellen in der Behälterwand 2 durch den Lambwellenerreger 4 bzw. ihre Übertragung auf den Lambwellenempfänger 5. Die Ausbreitung einer Lambwelle des s₀-modes als Oberflächenwelle entlang der Behälterwand 2 ist durch strichlierte Linien im mittleren Teil 13 der Fig. 1 angedeutet. Zur Erregung der Lambwellen in der Behälterwand 2 haben sich Wechselspannungsimpulse am piezo-elektrischen Element 8 des Lambwellenerregers 4 mit einer Impulsdauer von beispielsweise 20 µsec und einer Frequenz von etwa 1 MHz als geeignet erwiesen, wobei die Erregerfrequenz abhängig von der Wandstärke zu wählen ist. Die Erfindung ist auf ein solches Verfahren jedoch nicht beschränkt; es können Lambwellen z.B. auch nach einem Dauerstrich-Verfahren erregt werden; auch in diesem Fall ist die Erfindung vorteilhaft.

Um die Erregungszone b bei einer gewölbten Behälterwand 2 oder einem rohrförmigen Behälter 1 nicht auf eine Berührungslinie zwischen Prisma 6 und Behälterwand 2 einzuschränken, sondern eine größtmögliche Berührungsfläche zur Erlangung einer höheren Amplitude der Lambwellen zu erreichen, müßte die Auflagefläche 9 des Prismas 6 möglichst genau der Wölbung der Behälterwand 2 folgen, also eine kreissegmentförmige Ausnehmung aufweisen. Ein solches Prisma würde aber nur auf einen speziellen Rohrdurchmesser D oder eine bestimmte Wölbung der Behälterwand 2 passen. Bei kleineren Rohrdurchmessern D wäre die mechanische Auflage instabil und die Erregungszone b wieder auf eine Berührungslinie reduziert. Bei größeren Rohrdurchmessern D läge das Prisma nur mit seinen beiden Außenkanten auf der Behälterwand 2 auf. Es würden also für jeden Behälter 1 mit unterschiedlichem Wölbungsradius der Behälterwand 2 oder für jeden rohrförmigen Behälter 1 mit unterschiedlichem Durchmesser D speziell daran angepaßte Prismen 6 benötigt, was die gesamte Vorrichtung sowie ihre Installation sehr verteuern und verkomplizieren würde.

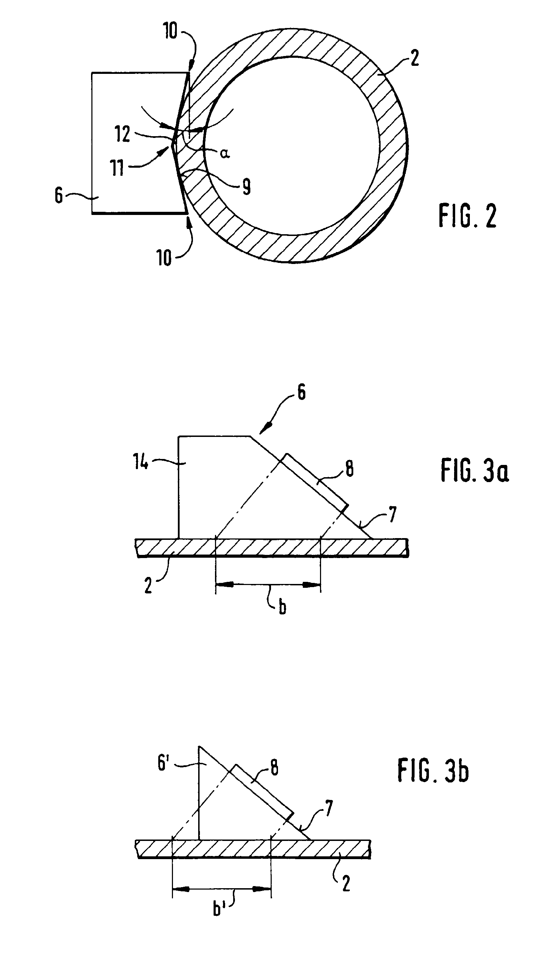

Um eine so kostenintensive Ausbildung der Prismen 6 für den Lambwellensensor zu vermeiden, wird vorgeschlagen, die Auflagefläche 9 des Prismas 6 von den beiden Seitenkanten 10 aus nach innen spitzwinklig bis zur Mittellinie 11 abzuschrägen, wie es in Fig. 2 verdeutlicht ist. Für rohrförmige Behälter 1, deren Durchmesser D zwischen 20 mm und 200 mm liegt, beträgt der Winkel α, um den die Auflagefläche 9 des Prismas 6 beidseitig nach innen abgeschrägt ist, ca. 8°. Es ist aber auch eine Staffelung dieses Winkels α möglich, indem man beispielsweise einen Winkel von 8° für Rohrdurchmesser von 20 mm bis 60 mm, einen Winkel von 5° für Rohrdurchmesser von 60 mm bis 120 mm und einen Winkel von 2° für Rohrdurchmesser von 120 mm bis 200 mm vorsieht; für kleinere Rohrdurchmesser als 20 mm kann auch ein Winkel von 11 günstig sein. Somit soll der Winkel α im Bereich von 2° bis 11° liegen.

Wie aus Fig. 2 zu ersehen ist, wird damit die Auflagefläche 9 des Prismas 6 soweit an den Verlauf der Behälterwand 2 angenähert, daß sich deren Mantelfläche 3 derart in den sich an der Mittellinie 11 ergebenden stumpfen Winkel einschmiegen kann, daß sich aus den theoretisch zwei Berührungslinien des so ausgebildeten Prismas 6 mit der Mantelfläche 3 des Behälters 1 eine praktisch größere Berührungsfläche ergibt, woraus sich eine größere Amplitude des Empfangssignals am Lambwellenempfänger 5 ergibt. Außerdem verkleinert sich auch der mit Koppelpaste auszufüllende keilförmige Zwischenraum 12 zwischen der Auflagefläche 9 und der Mantelfläche 3. Die geringere Koppelpastenschichtdicke erlaubt eine bessere Impedanzanpassung zwischen dem Prisma 6 und der Behälterwand 2 für die Übertragung der Ultraschallwellen. Parasitäre Wellen und andere Störeffekte können weitgehend vermieden werden.

Die beidseitig nach innen abgewinkelte Auflagefläche 9 erleichtert auch das Ausrichten der Prismen 6 bei ihrer Befestigung an der Mantelfläche 3 des Behälters 1 und kann sogar eine teilweise Selbstjustierung der Prismen 6 bewirken, wodurch sich eine bessere Richtcharakteristik für die Einkopplung und Übertragung der Lambwellen ergibt und somit beim Empfangssignal Interferenzen zwischen der sich auf kürzestem Weg ausbreitenden Lambwelle und in der Behälterwand umlaufenden Lambwellen vermieden werden. Auch die mechanische Stabilität der Anordnung wird verbessert.

Für die Ultraschallwandlung am Lambwellenerreger 4 und am Lambwellenempfänger 5 wird an sich nur ein Prisma mit dreieckiger Seitenansicht benötigt. Die Prismen 6 gemäß Fig. 1 und 2 sind jedoch von der Senkrechten eines solchen Dreieckprismas aus parallel zur Behälterwand 2 quaderförmig verlängert und selbstverständlich auch in diesem Bereich mit einer in gleicher Weise, wie oben beschrieben, nach innen abgeschrägten Auflagefläche 9 ausgebildet. Auch dies trägt zu einer besseren mechanischen Stabilität der Anordnung bei und ist hilfreich bei der Befestigung und Ausrichtung der Prismen 6 an der Mantelfläche 3 der Behälterwand 2.

Aus den Fig. 3a und 3b ist noch ein weiterer Vorteil erkennbar, der sich aus der quaderförmigen Verlängerung der Prismen 6 ergibt. Fig. 3a zeigt ein auf einer Platte oder einer Behälterwand 2 angeordnetes Prisma 6 mit der quaderförmigen Verlängerung 14 und dem auf der von der Behälterwand 2 abgewandten Schräge 7 befestigten piezo-elektrischen Element 8. Fig. 3b dagegen zeigt ein ebenso auf einer Platte oder einer Behälterwand 2 angeordnetes Prisma 6' mit dem piezo-elektrischen Element 8 auf der Schrägen 7, das aber nicht quaderförmig verlängert ist, sondern in der Seitenansicht dreieckförmig ist. Es ist zu erkennen, daß gemäß Fig. 3a die Projektion der auf der Schrägen 7 des Prismas 6 von dem piezo-elektrischen Element 8 bedeckten Fläche auf die Grenzfläche zwischen dem Prisma 6 und der Platte oder Behälterwand 2 vollständig innerhalb des Prismas 6 bzw. dessen Quaderförmiger Verlängerung 14 liegt, während sie im Falle der Fig. 3b über das Prisma 6' hinausreicht. Da diese Projektion, wie eingangs dargelegt, die Erregungszone b für die Lambwellen definiert, ermöglicht die quaderförmige Verlängerung 14 des Prismas 6 zusammen mit einem entsprechend bemessenen piezo-elektrischen Element 8 auch eine Verlängerung der Erregungszone b bzw. ihre bessere Ausnutzung gegenüber dem Prisma 6' mit dreieckiger Seitenansicht gemäß Fig. 3b, wo die Erregungszone b' durch das Prisma 6' selbst verkürzt ist.

Die Prismen 6 können vorteilhaft aus Standard-Kunststoffteilen gefertigt werden, während die piezo-elektrischen Elemente 8 vorzugsweise aus neuartigen Composite-Materialien hergestellt werden können, deren akustische Impedanz an das Kunststoff-Material der Prismen 6 angepaßt ist. Diese neuartigen Composite-Materialien erlauben nicht nur eine bessere Impedanz- oder Z-Anpassung an Kunststoff, durch ihre Verwendung können auch die Materialkosten im Vergleich zu herkömmlichen piezo-elektrischen Materialien gesenkt werden. Denkbar ist die Verwendung von Composite-Materialien auch für die Prismen 6, wobei dann wiederum eine Anpassung der akustischen Impedanz an das Material der Behälterwand 2 vorzunehmen wäre, was insbesondere bei Behältern 1 oder Rohren aus Kunststoff Vorteile erbringt.

## Patentansprüche

1. Prismen-Lambwellensensor, der als Teil einer Vorrichtung zur elektronischen Überwachung von Füllständen in Behältern (1) an der Außenfläche einer Behälterwand (2) im Bereich des zu überwachenden Füllstandsniveaus angebracht wird und
- aus einem Lambwellenerreger (4) und einem zu diesem im Abstand angeordneten Lambwellenempfänger(5) besteht,
-- die beide Ultraschallwandler sind und
-- jeweils aus einem an der Behälterwand (2) befestigten Prisma (6) oder prismenförmigen Formteil (6) und einem auf dessen von der Behälterwand (2) abgewandten Schräge (7) befestigten, über elektrische Anschlüsse mit einem Erregerstromkreis bzw. einem Auswertestromkreis verbundenen piezo-elektrischen Element (8) bestehen,
--- wobei für die Anwendung an rohrförmigen Behältern (1) oder Behältern (1) mit gewölbter Behälterwand (2) die Auflagefläche (9) der Prismen (6) von den Seitenkanten (10) aus nach innen bis zur Mittellinie (11) spitzwinklig abgeschrägt ist und dadurch in der Auflagefläche (9) eine keilförmige Ausnehmung (12) mit stumpfem Winkel gebildet ist.

2. Prismen-Lambwellensensor nach Anspruch 1, bei dem für die Anwendung an rohrförmigen Behältern (1) oder an Behältern (1) mit gewölbter Behälterwand (2) der Winkel (α), um den die Auflagefläche (9) der Prismen (6) von den Seitenkanten (10) aus nach innen abgeschrägt ist, im Bereich von 2° bis 11° liegt.

3. Prismen-Lambwellensensor nach Anspruch 2, bei dem für die Anwendung an rohrförmigen Behältern (1) mit einem Außendurchmesser (D) von 20 mm bis 200 mm oder einem Behälter (1) mit dementsprechend gewölbter Behälterwand (2) der Winkel (α) jeweils ca. 8° beträgt.

4. Prismen-Lambwellensensor nach einem der Ansprüche 1 bis 3, bei dem Prismen (6) mit dreieckförmiger Seitenansicht in Richtung der Behälterwand (2) eine quaderförmige Verlängerung (14) aufweisen.

5. Prismen-Lambwellensensor nach einem der Ansprüche 1 bis 4, bei dem die Prismen (6) aus Standard-Kunststoffteilen gefertigt sind und die piezo-elektrischen Elemente (8) aus einem Composite-Material bestehen, dessen akustische Impedanz an das Kunststoff-Material der Prismen (6) angepaßt ist.

6. Prismen-Lambwellensensor nach einem der Ansprüche 1 bis 4, bei dem die Prismen (6) aus Composite-Material bestehen, dessen akustische Impedanz an das Material, vorzugsweise Kunststoff, der Behälterwand (2) angepaßt ist.
